# EUROPÄISCHE PATENTSCHRIFT

(11) **EP 0 462 445 B1**
(45) Veröffentlichungstag und Bekanntmachung des Hinweises auf die Patenterteilung: **03.11.1993**
(21) Anmeldenummer: 91109216.1
(22) Anmeldetag: 06.06.1991
(51) Int. Cl.: B60B 11/02

(54) **Verbindung für Zwillingsräder an Traktoren**
Dual wheel fastening on tractors
Dispositif de jumelage aux tracteurs

(30) Priorität: 30.10.1990 DE 4034490; 19.06.1990 DE 9006871 U
(43) Veröffentlichungstag der Anmeldung: 27.12.1991
(73) Patentinhaber: Nubbemeyer, Heinrich, D-49584 Fürstenau (DE)
(72) Erfinder: Nubbemeyer, Heinrich, D-49584 Fürstenau (DE)
(74) Vertreter: Schulze Horn, Stefan, Dipl.-Ing. M.Sc.

(56) Entgegenhaltungen:
- EP-A- 0 049 420
- EP-A- 0 392 178
- WO-A-82/01687
- US-A- 1 780 404
- US-A- 4 787 679

## Beschreibung

Die Erfindung betrifft eine Verbindung für Zwillingsräder an Traktoren mit einem schleppradseitigen und einem zwillingsradseitigen Verbindungsring.

Zwillingsräder werden für Traktoren verwendet, falls es erforderlich ist, mit einem schweren Traktor mit ausreichender Zugkraft auf nachgiebigem Gelände zu arbeiten.

Sollen Zwillingsräder montiert werden, so ergibt sich das Problem, diese bei Bedarf auf bequeme und wenig arbeitsaufwendige Weise an den schleppradseitigen Rädern anzubringen und bei Erfordernis wieder abmontieren zu können.

Es sind Verbindungen für Zwillingsräder an Traktoren bekannt, bei denen schleppradseitige und zwillingsradseitige Verbindungsringe verwendet werden, deren schleppradseitiger Verbindungsring an der Felge eines schleppradseitigen Rades befestigt ist und deren zwillingsradseitiger Verbindungsring an der Felge des Zwillingsrades befestigt ist und so gestaltet ist, daß sowohl am schleppradseitigen als auch am zwillingsradseitigen Verbindungsring eine sich diagonal über das Zentrum derselben erstreckenden Traverse angeschweißt ist, in welcher eine zentrale Bohrung sowie in gleichen axialen Abständen von dieser Bohrung in der Traverse des zwillingsradseitigen Verbindungsringes zwei Haltedorne zur Übertragung der Drehkräfte vorgesehen sind, welche in entsprechende Bohrungen der Traverse des schleppradseitigen Verbindungsringes eingreifen.

Soll nun das Zwillingsrad zugeschaltet werden, so muß dieses, an sich recht schwere Rad zunächst in Umfangrichtung bis zu 90° gedreht werden, um die Haltedorne mit den entsprechenden Bohrungen in der schleppradseitigen Traverse zum Fluchten zu bringen, worauf dann das Zwillingsrad mit dem Schlepprad durch einen in die zentrale Bohrung einzuführenden Schraubenbolzen verschraubt werden kann. Bei dieser bekannten Gestaltung ist es jedoch nachteilig, daß es äußerst arbeitsaufwendig ist, die Haltedorne des an sich recht schweren Zwillingsrades durch Drehen desselben um 90° mit den in der Traverse vorgesehenen Bohrungen zum Fluchten zu bringen.

Aus der US-A-1 780 404 ist ein Rad für Lastwagen, Traktoren, Anhänger und dergleichen bekannt, wobei das Rad eine Verbindung gemäß dem Oberbegriff des Anspruchs 1 mit einem Hauptabschnitt und einem Hilfsabschnitt aufweist, der eine seitliche Ausdehnung davon darstellt, wobei die benachbarten Seiten der Abschnitte mit ineinandergreifenden Vorsprüngen und Eintiefungen ausgebildet sind, wobei die verschiedenen Anordnungen von ineinandergreifenden Vorsprüngen und Eintiefungen an im wesentlichen gegenüberliegenden Punkten um die Achse der Räder herum angeordnet sind, wobei die Vorsprünge und Vertiefungen jeder Anordnung mit geneigten zusammenwirkenden Oberflächen ausgestattet sind, um eine relative winklige und radiale Ausrichtung der Abschnitte zu bewirken, und Bolzen, um die Abschnitte miteinander in Eingriff zu bringen, wobei die Abschnitte darin ausgebildete Öffnungen aufweisen, um die Bolzen aufzunehmen, wobei die Durchmesser der Öffnungen in den Ebenen der benachbarten Flächen der Abschnitte relativ größer sind als die Durchmesser der Bolzen, um zu verhindern, daß eine leichte relative Verschiebung der Radabschnitte den Durchgang der Bolzen durch die Öffnungen erschwert.

Nachteilig bei diesem vorbekannten Rad ist, daß der durch die Vorsprünge und Vertiefungen am schleppradseitigen Rad gebildete Zahnkranz bei Betrieb ohne Zwillingsrad relativ weit axial nach außen ragt, eine Unfallgefahr darstellt und zudem leicht verschmutzt oder beschädigt wird.

Der Erfindung liegt die Aufgabe zugrunde, eine Verbindung für Zwillingsräder von Traktoren zu schaffen, mit welchen diese Nachteile bisher bekannter Vorrichtungen vermieden werden können und mit der das Zwillingsrad auf unkomplizierte und wenig arbeitsaufwendige Weise anmontiert und bei Bedarf wieder abmontiert werden kann, wobei bei Betrieb ohne Zwillingsräder das Bedienungspersonal vor Verletzungen durch die Zähne der schleppradseitigen Verzahnung geschützt ist.

Die Aufgabe besteht auch darin, die an sich bei der Herstellung kostenaufwendigen Zahnkränze so kostengünstig wie möglich zu gestalten, wobei die Aufgabe sich auch darauf erstreckt, eine derartige verbesserte Verbindung für Zwillingsräder zu schaffen, die es ermöglicht, im Falle, wenn der Schlepper mal nicht wie üblich mit Breitbereifung am Schlepper und mit Schmalbereifung am Zwillingsrad fährt, sondern umgekehrt, mit Schmalbereifung innen an der Schlepperachse und mit Breitbereifung außen als Zwillingsrad, auf einfache Weise einen schnellen Wechsel der Bereifung vornehmen zu können ohne daß jedesmal die Kupplung umgeschraubt werden muß.

Die Aufgabe besteht auch darin, eine dauerhafte, eine axiale elastische Zugkraft erzeugende Verbindungseinrichtung für das axiale Verspannen des Zahnkranzes des schleppradseitigen Verbindungsringes mit dem Zahnkranz des zwillingsradseitigen Verbindungsringes zu schaffen, um eine sichere dauerhafte Verzahnung auch bei langzeitigen Befahren unebenen Geländes zu gewährleisten.

Die Aufgabe wird durch die kennzeichnenden Merkmale des Anspruches 1 gelöst, wobei weitere Ausgestaltungen durch die kennzeichnenden Merkmale der Ansprüche 2 - 8 gelöst werden.

Dadurch, daß an den äußeren Umfangsflächen der Zahnräder Führungsringe angeordnet sind, wobei die schleppradseitigen Führungsringe den schleppradseitigen Zahnkranz bis zur vollen Höhe seiner Zähne ummanteln, werden die Zähne des schleppradseitigen Zahnkranzes bei Betrieb ohne Zwillingsrad einerseits wirkungsvoll gegen Beschädigung und/oder Verschmutzung geschützt und andererseits werden Personen vor Verletzungen durch den umlaufenden Zahnkranz bewahrt.

Es ist vorteilhaft, daß, nach einer bevorzugten Ausführungsform, die Kupplung nicht immer umgeschraubt werden muß, wenn man nicht wie üblich Breitbereifung am Schlepper und Schmalbereifung am Zwillingsrad fährt, sondern umgekehrt Schmalbereifung innen an der Schlepperachse und die Breitbereifung außen als Zwillingsrad.

Auch ist es günstig, daß die Herstellungskosten, der an sich sehr kostenaufwendigen Zahnkränze vermindert werden können, da es nach einer bevorzugten Ausführungsform ermöglicht wird den schleppradseitigen Zahnkranz lediglich als Teilverzahnungsabschnitt zu gestalten, welcher diagonal gegenüberliegend lediglich jeweils einige Zähne umfaßt.

In der Zeichnung sind mehrere Ausführungsbeispiele des Gegenstandes der Erfindung dargestellt.
- Fig. 1: zeigt eine perspektivische Ansicht auf die erfindungsgemäße Verzahnung des schleppradseitigen Verbindungsringes mit dem zwillingsradseitigen Verbindungsring in perspektivischer Ansicht;
- Fig. 2: zeigt eine Draufsicht auf den schleppradseitigen Verbindungsring in Richtung nach der Linie II - II gemäß Fig. 1;
- Fig. 3: zeigt ein vereinfachtes Ausführungsbeispiel der in Form eines Schraubbolzens gestalteten Verbindungseinrichtung, welche mittels eines am Ende angeformten Hakens eine Verbindungslasche des schleppradseitigen Verbindungsringes hintergreift;
- Fig. 4: zeigt die bereits fest in Verzahnungseingriff gebrachte Verbindung gemäß Fig. 3 in perspektivischer Ansicht;
- Fig. 5: zeigt einen Querschnitt durch die Verbindung gemäß Fig. 3 und 4 im Querschnitt;
- Fig. 6: zeigt eine Verbindungseinrichtung für das Verzahnen des schlepperseitigen Zahnkranzes mit dem zwillingsradseitigen Zahnkranz mittels eines hydraulischen oder pneumatischen Zylinders;
- Fig. 7: zeigt den hydraulischen oder pneumatischen Zylinder gemäß Fig. 6 im Querschnitt.

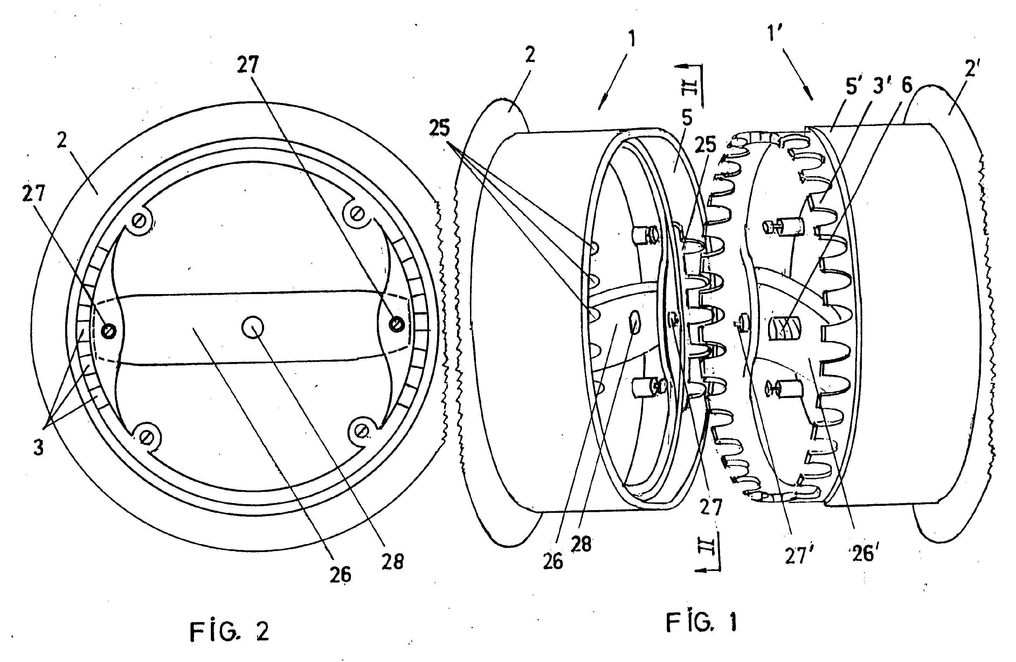

Wie aus Fig. 1 zu ersehen ist, besteht der zwillingsradseitige Verbindungsring 1' aus einem an diesem befestigten Zahnkranz 3', der eine ringförmig voll umlaufende Verzahnung aufweist, wobei der in der Zeichnung linksseitig dargestellte schlepperseitige Verbindungsring 1 mit einem Zahnkranz 3 verbunden ist, der aus zwei sich diametral gegenüberliegenden, jeweils lediglich nur einige Zähne aufweisenden Teilverzahnungsabschnitt 25 besteht.

An den äußeren Umfangsflächen der Zahnkränze 3 und 3' sind Führungsringe 5 und 5' angeordnet, wobei die schleppradseitigen Führungsringe 5 die Zähne der Teilverzahnungsabschnitte 25 des in der Zeichnung links dargestellten schlepperradseitigen Verbindungsringes bis zur vollen Höhe der Zähne ummanteln, jedoch beim in der Zeichnung rechts dargestellten zwillingsradseitigen Verbindungsring 1' der Führungsring 5' die Zahnkränze 3' in voller Höhe der Zähne frei läßt, derart, daß die Zähne der Zahnkränze 3' des zwillingsradseitigen Verbindungsringes in die ummantelnden Führungsringe 5 der in der Zeichnung linksseitig dargestellten Teilverzahnungsabschnitte 25 eingreifen können. Der die Zähne des schleppradseitigen Verbindungsringes 1 ummantelnde Führungsring 5 dient dazu, bei Fahrt des Schleppers ohne Zwillingsräder das Bedienungspersonal vor Verletzungen durch die Zähne des schleppradseitigen Teilverzahnungsabschnittes 25 zu bewahren.

Die Befestigungseinrichtung bei diesem Ausführungsbeispiel besteht aus einem Schraubenbolzen 6, der sich axial durch sie Nabenbohrung eines mit dem zwillingsradseitigen Verbindungsring 1' mittels Schrauben 27' verschraubbaren Steges 26' hindurcherstreckt und mit seinem freien, mit Gewindegängen versehenen Ende in eine zentrale Gewindebohrung 28 eines mit dem schleppradseitigen Verbindungsringes 1 mittels Schrauben 27 verschraubbaren Steges 26 befestigend eingreift, welcher in Form einer sich diagonal über das Zentrum erstreckenden Traverse gestaltet ist.

Der herausschraubbare Steg 26 bzw. 26' wird verwendet, falls die Kupplung umgeschraubt werden muß, wenn der Traktor mal nicht wie üblich Breitbereifung am Schlepper und Schmalbereifung am Zwillingsrad fährt, sondern umgekehrt, Schmalbereifung innen an der Schlepperachse und die Breitbereifung außen am Zwillingsrad. So kann lediglich durch das Lösen zweier Schrauben der Steg gewechselt werden, wobei er das Gewinde immer in der richtigen Kupplungshälfte hat.

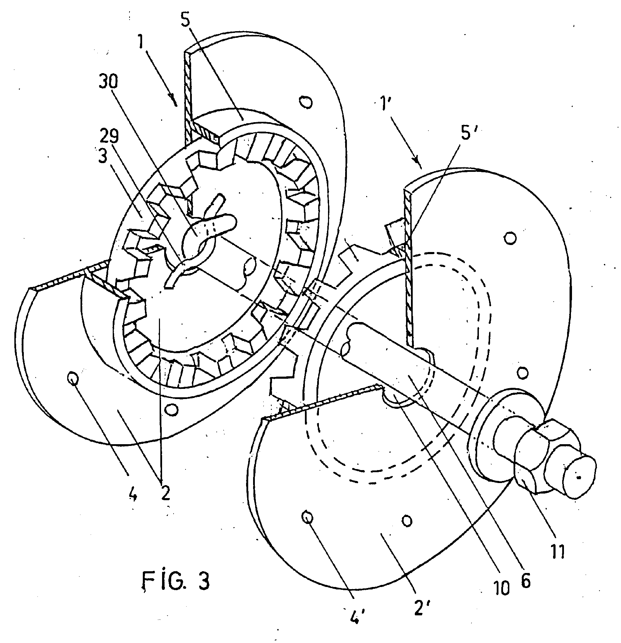

In den Fig. 3 - 5 ist ein vereinfachtes Ausführungsbeispiel des Gegenstandes der Erfindung dargestellt, gemäß welchem für die Verbindung für Zwillingsräder an Traktoren ein schleppradseitiger 1 und ein zwillingsradseitiger Verbindungsring 1' verwendet werden, die so ausgebildet sind, daß der schleppradseitige Verbindungsring 1 der zwillingsradseitige Verbindungsring 1' in Form von an Radscheiben 2 bzw. 2' befestigten Zahnkränzen 3 bzw. 3' gestaltet sind, wobei die Verbindungsringe 1 bzw. 1' mittels sich durch Bohrlöcher 4 eines Zusatzlochkreises erstreckender Befestigungsbolzen mit der entsprechenden Felge des schleppradseitigen Rades bzw. des zwillingsradseitigen Rades verschraubbar sind. Die Verbindungsringe 1 bzw. 1' sind teils im Schnitt in perspektivischer Ansicht dargestellt, und zwar in dem noch nicht verzahnten Zustand, wobei im linken Teil der Zeichnung der schleppradseitige Verbindungsring 1 und im rechten Teil der Zeichnung der zwillingsradseitige Verbindungsring 1' dargestellt ist.

Der schleppradseitige Verbindungsring 1 weist einen sich an der äußeren Umfangsfläche des Zahnkranzes 3 axial bis zur vollen Höhe H der Zähne desselben erstreckenden und die Zähne außenseitig ummantelnden Führungsring 5 auf, wobei dieser die Zähne des schleppradseitigen Zahnkranzes 3 an der Außenseite ummantelnde Führungsring 5 dazu dient bei der Fahrt des Schleppers ohne Zwillingsräder die rotierenden scharfen Zähne von unbeabsichtigter Berührung derselben während der Fahrt abzuschirmen und die vertikale Zentrierung vorzunehmen.

Am zwillingsradseitigen Verbindungsring 1' ist ein passender mit dem Führungsring 5 fluchtender, jedoch die Zähne nicht in voller Höhe abdeckender Führungsring 5' vorgesehen.

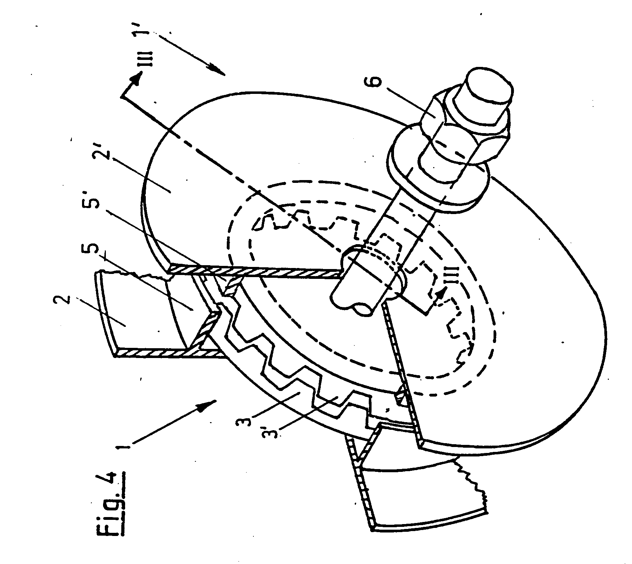

In Fig. 4 sind die Verbindungsringe 1 bzw. 1' kurz vor dem axialen Verzahnungs-Eingriff des zwillingsradseitigen Kranzes 3' mit dem schleppradseitigen Zahnkranz 3 dargestellt. Haben sich diese Zahnkränze in axialer Richtung verzahnt, so wird durch eine zentrale Öffnung in der zwillingsradseitigen Radscheibe 2' ein Schraubenbolzen 6 eingebracht, derart, daß ein am freien Ende desselben angeformter Haken 30 eine an der schlepperseitigen Radscheibe 2 angeschweißte Verbindungslasche 29 hintergreift. Wird die Mutter 11 des Schraubenbolzens 6 angezogen, so verzahnt sich der Zahnkranz 2' des Zwillingsrades mit dem Zahnkranz 3 des schleppradseitigen Rades, wobei auch große Drehungskräfte vom schleppradseitigen Rad auf das Zwillingsrad übertragbar sind.

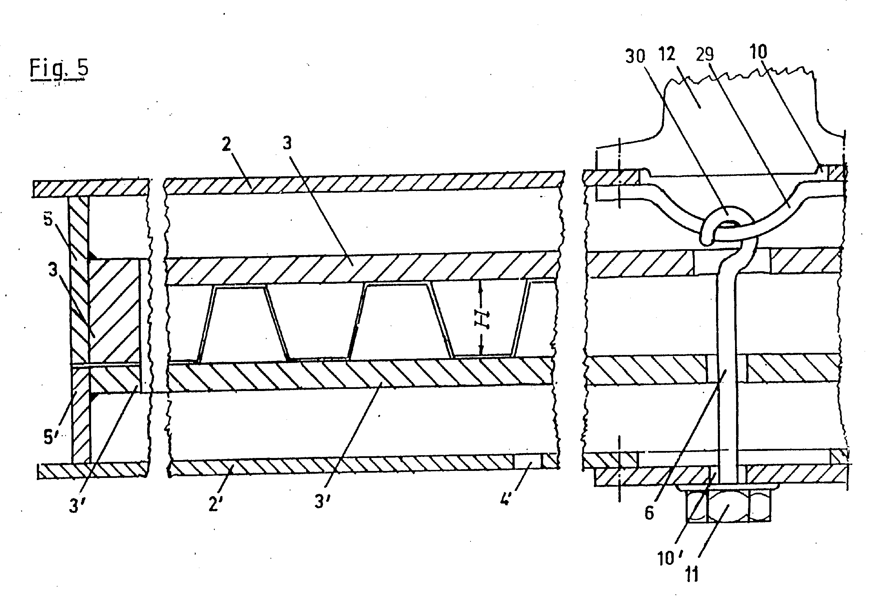

In Fig. 5 ist im linken Teil der Zeichnung ein Teilschnitt III - III nach Fig. 4 dargestellt, im mittleren Teil der Zeichnung ein Teilstück durch die obenseitig dargestellte Radscheibe 2 mit dem schleppradseitigen Zahnkranz 3 und durch den unterseitig dargestellten zwillingsradseitigen Zahnkranz 2' mit der Radscheibe 2', wobei im rechten Teil der Zeichnung der Fig.5 der Schraubenbolzen 6 dargestellt ist, der mittels seines Hakens 30 die Verbindungslasche 29 hintergreift.

Die schleppradseitige zentrale Öffnung 10 in der Radscheibe 2 fluchtet mit der Achsnabe 12.

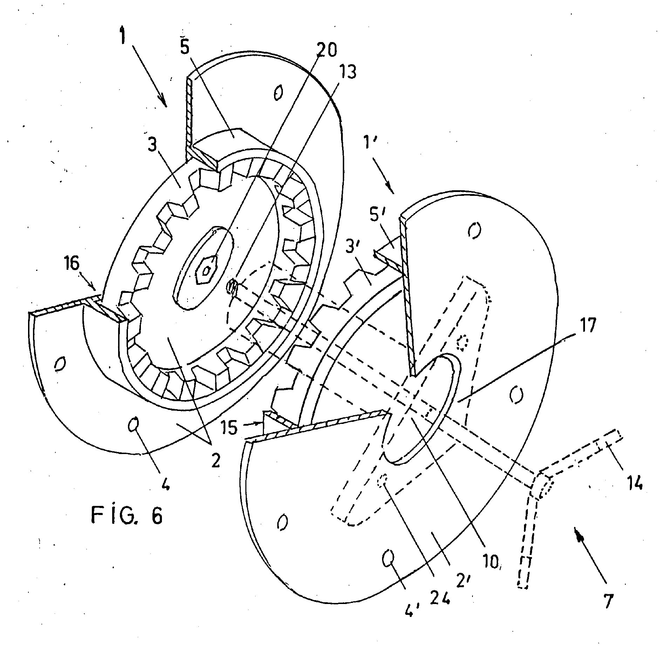

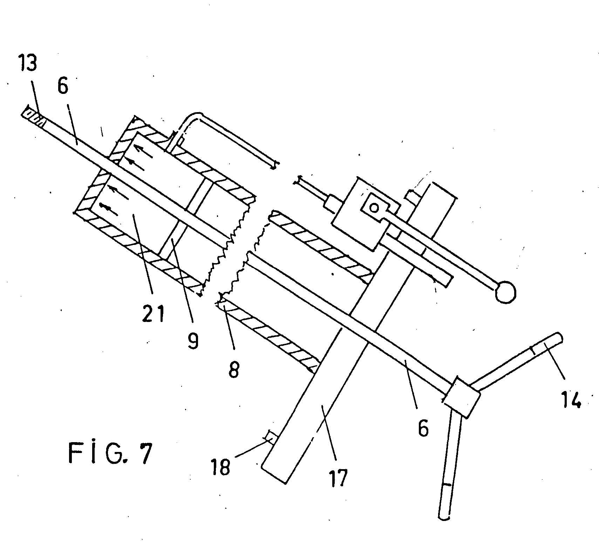

In den Fig. 6 - 7 ist ein anderes Ausführungsbeispiel eines einen pneumatischen oder hydraulischen Zylinder aufweisenden Verbindungseinrichtung zum Verbinden des schleppradseitigen Verbindungsringes mit dem zwillingsradseitigen Verbindungsring dargestellt; hierbei ist das Schlepprad 16 mit dem Zwillingsrad 15 in noch nicht verzahntem Zustand ihrer Zahnkränze 3 bzw. 3' gezeichnet. Die schleppradseitige Befestigungsscheibe 2 ist hierbei starr mittels eines Führungsringes 5 mit dem schleppradseitigen Zahnkranz 3 verbunden, derart, daß der Führungsring 5 sich über die gesamte Höhe der Zähne des Zahnkranzes 3 erstreckt.

Die zwillingsradseitige Befestigungsscheibe 2' ist starr mittels eines Führungsringes 5' geringerer Höhe mit dem zwillingsradseitigen Zahnkranz 3' verbunden.

Die Verbindungsringe 1 bzw. 1' sind mittels sich durch Bohrlöcher 4 eines zusätzlichen Radbolzenlochkreises erstreckenden Befestigungsbolzen mit der entsprechenden Felge des Schlepprades bzw. des Zwillingsrades verschraubbar.

Die Befestigungseinrichtung 7 besteht aus einem eine axiale Zugkraft erzeugenden Kraft-Zylinder 8, durch dessen Innenraum sich ein, mit einem Kolben 9 in festverbundener, als Kolbenstange wirkender Bolzen 6 hindurcherstreckt, wobei dieser Bolzen 6 an seinem schleppradseitigen Ende mit einem Außengewinde 13 versehen ist. Das zwillingsradseitige Ende des Bolzen 6 ist mit Dreh-Handgriffen 14 ausgestattet. Am zwillingsradseitigen Ende des Kraftzylinders 8 ist ein sich am Verbindungsring 1' des Zwillingsrades 15 abstützendes Stützsegment 17 angeordnet, an welchem in Bohrlöcher 24 des Radbolzenlochkreises der Zwillingsräder 15 eingreifende Mitnehmerbolzen 18 angeordnet sind. An der Nabe der Schleppräder 16 ist eine Mutter 20 mit einem dem Außengewinde des Bolzen 6 entsprechenden Innengewinde angeschweißt. Die Arbeitsweise der Verbindung ist folgende:

Das Zwillingsrad wird an das entsprechende Schlepprad herangeschoben und muß nur um einen geringen Drehwinkel gedreht werden, um ein Fluchten der Zähne der Zahnkränze 3 bzw. 3' zu ermöglichen.

Dann wird die Befestigungseinrichtung 7 durch die zentrale Bohrung 10 eingebracht und der Bolzen 6 wird mittels der Drehhandgriffe 14 mit seinen am schleppradseitigen Ende befindlichen Außengewinde 13 in das entsprechende Innengewinde der an der Felge des Schlepprades angeschweißten Mutter eingeschraubt.

Dann wird der Kraft-Zylinder mit Druckfluidum beaufschlagt, wodurch eine Zugkraft ausgeübt wird, so daß das am anderen Ende der Befestigungseinrichtung 7 angeformte Stützsegment 17 mit seinen Mitnehmerbolzen 18 in die Bohrungen des Radbolzenlochkreises der Nabenabdeckplatte des Zwillingsrades hineingedrückt wird, so daß ein fester Halt der Befestigungseinrichtung 7 zwischen dem Schlepprad und dem Zwillingsrad auch während der Arbeit auf unebenen Gelände gewährleistet wird.

Es ist ausreichend wenn der Zahnkranz 3' des Zwillingsrades oder der Zahnkranz 3 des Schlepprades lediglich zwei einander diametral gegenüberliegende Teilverzahnungsabschnitte 25 mit jeweils einigen Zähnen aufweist, da auch dann eine ausreichende Verbindung der Räder gegeben ist, wobei der Fertigungsaufwand erheblich verringert werden kann.

## Patentansprüche

1. Verbindung für Zwillingsräder an Traktoren mit einem schleppradseitigen und einem zwillingsradseitigen Verbindungsring, wobei an Radscheiben (2, 2') der schleppradseitigen (1) und zwillingsradseitigen Verbindungsringe (1'), sich bei Verbund axial verzahnende Zahnkränze (3, 3') befestigt sind,
dadurch gekennzeichnet,
daß an den äußeren Umfangsflächen der Zahnkränze (3, 3') Führungsringe (5, 5') angeordnet sind, wobei die schleppradseitigen Fuhrungsringe (5) den schleppradseitigen Zahnkranz (3 bzw. 25) bis zur vollen Höhe seiner Zähne (H) ummanteln.

2. Verbindung nach Anspruch 1, dadurch gekennzeichnet, daß der am schleppradseitigen Verbindungsring (1) befestigte Zahnkranz (3) aus zwei sich diametral gegenüberliegenden, jeweils lediglich nur einige Zähne aufweisenden Teil Verzahnungsabschnitten (25) besteht und der am zwillingsradseitigen Verbindungsring (1') befestigte Zahnkranz (3') eine ringförmig voll umlaufende Verzahnung aufweist.

3. Verbindung nach einem der vorhergehenden Ansprüche, dadurch gekennzeichnet, daß die zwillingsradseitigen Verbindungsringe (1') mit den schleppradseitigen Verbindungsringen (1) mittels einer sich durch eine zentrale Nabenbohrung (10) in der Radscheibe (2') des zwillingsradseitigen Verbindungsringes (1') hindurcherstreckenden Befestigungseinrichtung (7) axial befestigbar sind.

4. Verbindung nach Anspruch 3, dadurch gekennzeichnet, daß die Befestigunqseinrichtung (7) aus einem Schraubenbolzen (6) besteht, dessen schleppradseitiges, mit Außengewinde versehenes Ende in eine an der schleppradseitigen Radscheibe (2) zentrisch befestigte Mutter (20) eingreift.

5. Verbindung nach Anspruch 3, dadurch gekennzeichnet, daß die Befestigungseinrichtung (7) aus einem Schraubenbolzen (6) besteht, dessen schleppradseitiges Ende mittels eines angeformten Hakens (30) eine Verbindungslasche (29) des schleppradseitigen Verbindungsringes (1) hintergreift.

6. Verbindung nach einem der vorhergehenden Ansprüche, dadurch gekennzeichnet, daß der die Verbindungseinrichtung (7) bildende Schraubenbolzen (6) sich axial durch die Naben-Bohrung eines mit dem zwillingsradseitigen Verbindungsring (1') mittels Schrauben (27) verschraubbaren Steges (26') hindurcherstreckt und mit seinem freien, mit Gewindegängen versehenen Ende in eine zentrale Gewindebohrung (28) eines mit dem schleppradseitigen Verbindungsring (1) mittels Schrauben (27) lösbar verschraubbaren Steges (26) eingreift, welcher in Form einer sich diagonal über das Zentrum erstreckenden Traverse gestaltet ist.

7. Verbindung nach Anspruch 6, dadurch gekennzeichnet, daß die Stege (26 bzw. 26') des schleppradseitigen bzw. des zwillingsradseitigen Verbindungsringes (1 bzw. 1') mittels lösbarer Schrauben (27 bzw. 27') herausschraubbar und gegeneinander austauschbar sind.

8. Verbindung nach einem der vorhergehenden Ansprüche, dadurch gekennzeichnet, daß die Befestigungseinrichtung (7) aus einem eine axiale Zugkraft erzeugenden, pneumatisch oder hydraulisch beaufschlagbaren Kraft-Zylinder (8) besteht, durch dessen Innenraum ein mit einem Zylinderkolben (9) verbundener, als Kolbenstange wirkender Bolzen (6) verläuft, der an seinem schleppradseitigen Ende mit einem Außengewinde (13) versehen ist, wobei das zwillingsradseitige Ende des Bolzens (6) mit einem Handgriff 14 versehen ist und am zwillingsradseitigen Ende des Kraftzylinders 8 ein sich am Zwillingsrad abstützendes Stützsegment (17) angeformt ist.

## Claims

1. Dual wheel fastening on tractors comprising a connection ring each at the side of the driven wheel and at the dual wheel wherein gear rims (3, 3') axially interengaging when connected are secured at wheel disks (2, 2') of the connection ring (1) at the side of the driven wheel and of the connection ring (1') at the side of the dual wheel,
**characterized in**
that at the outer circumferential areas of the gear rims (3, 3') guiding rings (5, 5') are arranged with the guiding rings (5) at the side of the driven wheel encasing the gear rim (3 or 25, respectively) up to the full heigth of the teeth (H) thereof.

2. Fastening according to claim 1, characterized in that the gear rim (3) secured at the connection ring (1) at the side of the driven wheel consists of two diametrically opposed partially toothed sections (25) each comprising only some teeth, and the gear rim (3') secured at the connection ring (1') at the side of the dual wheel comprises an annular continuously extending toothed wheel work.

3. Fastening according to one of the preceding claims, characterized in that the connection rings (1') at the side of the dual wheel are axially securable to the connection rings (1) at the side of the driven wheel by means of a fastening device (7) extending through a central hub boring (10) in the wheel disk (2') of the connection ring (1') at the side of the dual wheel.

4. Fastening according to claim 3, characterized in that the fastening device (7) consists of a threaded bolt (6) with the end thereof at the side of the driven wheel provided with an outer thread engaging with a nut (20) centrically secured at the wheel disk (2) at the side of the driven wheel.

5. Fastening according to claim 3, characterized in that the fastening device (7) consists of a threaded bolt (6) with the end thereof at the side of the driven wheel formed as a hook (30) gripping from the rear into a bracket (29) of the connection ring (1) at the side of the driven wheel.

6. Fastening according to one of the preceding claims, characterized in that the threaded bolt (6) forming the fastening device (7) axially extends through the hub boring of a web (26') connected with the connection ring (1') at the side of the dual wheel by means of screws (27) and the free end of the threaded bolt provided with a thread engages with a central threaded boring (28) of a web (26) detachably connected with the connection ring (1) at the side of the driven wheel by means of screws (27) wherein the web is designed as a tie-bar extending across the centre.

7. Fastening according to claim 6, characterized in that the webs (26 or 26', respectively) of the connection rings (1 or 1', respectively) at the side of the driven or dual wheel, respectively, are unscrewable and replaceable with each other by means of detachable screws (27 or 27', respectively).

8. Fastening according to one of the preceding claims, characterized in that the fastening device (7) consists of a power cylinder (8) generating an axial tractive power and being pneumatically or hydraulically operable with a bolt (6) extending through the interior of the cylinder, with the bolt connected with a cylinder piston (9) and acting as a piston rod and provided with an outer thread (13) at the end thereof at the side of the driven wheel wherein the end of the bolt (6) at the side of the dual wheel is provided with a handle (14) and a supporting segment (17) is shaped at the end of the power cylinder at the side of the dual wheel with the supporting segment supported at the dual wheel.

## Revendications

1. Liaison de roues jumelées sur des tracteurs, comprenant une bague de liaison du côté de la roue d'entraînement et une bague de liaison du côté de la roue jumelée, des couronnes dentées, (3, 3') qui s'engrènent axialement lors de la liaison étant fixées sur des disques de roues (2, 2') des bagues de liaison du côté de la roue d'entraînement (1) et du côté de la roue jumelée (1'),
caractérisée en ce que des bagues de guidage (5, 5') sont disposées sur les surfaces périphériques extérieures des couronnes dentées (3,3'), les bagues de guidage (5) côté roue d'entraînement entourant la couronne dentée (3 ou 25) située du côté de la roue d'entraînement sur la hauteur totale de ses dents (H).

2. Liaison selon la revendication 1, caractérisée en ce que la couronne dentée (3) fixée sur la bague d'entraînement (1) du côté de la roue d'entraînement se compose de deux segments partiels (25) de denture diamétralement opposés l'un à l'autre ne comprenant chacun que quelques dents, et en ce que la couronne dentelée (3') fixée sur la bague de liaison (1') du côté de la roue jumelée comprend une denture annulaire de tracé complet.

3. Liaison selon l'une des revendications précédentes, caractérisée en ce que les bagues de liaison (1') du côté de la roue jumelée peuvent être fixées axialement avec les bagues de liaison (1) du côté de la roue d'entraînement au moyen d'un dispositif de fixation (7) qui traverse un alésage central (10) de moyeu du disque de roue (2') de la bague de liaison (1') du côté de la roue jumelée.

4. Liaison selon la revendication 3 caractérisée en ce que le dispositif de fixation (7) se compose d'un boulon fileté (6) dont l'extrémité du côté de la roue d'entraînement, pourvue d'un filetage extérieur, pénètre dans un écrou (20) fixé au centre du disque de roue (2) du côté de la roue d'entraînement.

5. Liaison selon la revendication 3, caractérisée en ce que le dispositif de fixation (7) se compose d'un boulon fileté (6) dont l'extrémité du côté de la roue d'entraînement pénètre, au moyen d'une crochet (30) conformé, dans une boucle de liaison (29) de la bague de liaison (1) du côté de la roue d'entraînement.

6. Liaison selon l'une des revendications précédentes, caractérisée en ce que le boulon fileté (6) qui constitue le dispositif de liaison (7) traverse axialement l'alésage de moyeu d'une entretoise (26') qui peut être vissée, au moyen de vis (27'), avec la bague de liaison (1') du côté de la roue jumelée, et pénètre par son extrémité libre pourvue de filets, dans un alésage fileté central (28) d'une entretoise (26) qui peut être vissée de façon libérable, au moyen de vis (27), avec la bague de liaison (1) du côté de la roue d'entraînement, la configuration de l'entretoise consistant en une traverse s'étendant en diagonale au-dessus du centre.

7. Liaison selon la revendication 6, caractérisée en ce que les entretoises (26 ou 26') de la bague de liaison (1 ou 1') du côté de la roue d'entraînement ou du côté de la roue jumelée peuvent être dévissées grâce aux vis libérables (27 ou 27') et sont interchangeables entre elles.

8. Liaison selon l'une des revendications précédentes, caractérisée en ce que le dispositif de fixation (7) se compose d'un vérin à actionnement pneumatique ou hydraulique (8) engendrant une force de traction axiale, dont l'espace intérieur est traversé par un boulon (6), agissant comme tige de piston et relié au piston (9) de vérin, qui est pourvu d'un filet extérieur (13) à son extrémité du côté de la roue d'entraînement, l'extrémité du boulon (6), du côté de la roue jumelée, étant pourvue d'une poignée (14), et un segment d'appui (17) qui s'appuie sur la roue jumelée étant conformé sur l'extrémité du vérin (8) située du côté de la roue jumelée.
